# EUROPÄISCHE PATENTANMELDUNG

(11) **EP 1 508 264 A2**
(43) Veröffentlichungstag der Anmeldung: **23.02.2005**
(21) Anmeldenummer: 04019471.4
(22) Anmeldetag: 17.08.2004
(51) Int. Cl.: A01D 7/04, A01D 76/00

(54) **Bodenbearbeitungsvorrichtung mit automatischer Höhenverstellung**

(30) Priorität: 22.08.2003 DE 10338714; 28.08.2003 DE 10339715
(71) Anmelder: Amazonen-Werke H. Dreyer GmbH & Co. KG, 49205 Hasbergen (DE)
(72) Erfinder: Scheufler, Bernd, Dr., 49205 Hasbergen (DE); Dutzi, Sven, 49205 Hasbergen (DE); Marquering, Johannes, Dr., 49176 Hilter (DE); Pokriefke, Michael, 04229 Leipzig (DE)

(57) **Zusammenfassung**

Zur gleichmäßigeren flächigen Verteilung von Strohrückständen umfasst eine Bodenbearbeitungsvorrichtung (1) ein Striegelelement (2), eine Einrichtung zur Höhenverstellung (3) des Striegelelements, eine Sensoreinrichtung (4) zum Erfassen der Strohmenge eines Striegelelements und eine Steuereinrichtung (5) zum Steuern der Einrichtung zur Höhenverstellung des Striegelelements (3) in Abhängigkeit von der erfassten Strohmenge.

## Beschreibung

Die vorliegende Erfindung betrifft eine Bodenbearbeitungsvorrichtung gemäß dem Anspruch 1.

Die konservierende Bodenbearbeitung gewinnt zunehmend an Bedeutung. Um dabei einen gleichmäßigen Feldaufgang sicher zu stellen, spielt neben der Bodenbearbeitung auch die Strohverteilung eine entscheidende Rolle. Um eine gleichmäßige Strohverteilung zu gewährleisten, ist eine richtige Einstellung des Häckslers und Streuverteilers am Mähdrescher unbedingt erforderlich. Es ergeben sich jedoch an den Stellen Probleme, an denen der Mähdrescher kurzzeitig anhält. Für einen ungestörten Feldaufgang muss dort das Stroh nachverteilt werden. Herkömmliche Schleppzinkenstriegel eignen sich jedoch dafür nur bedingt.

Hiervon ausgehend liegt der vorliegenden Erfindung die Aufgabe zugrunde, eine Bodenbearbeitungsvorrichtung bereitzustellen, die es ermöglicht, Strohrückstände gleichmäßig flächig auf dem Boden zu verteilen.

Erfindungsgemäß wird diese Aufgabe durch eine Bodenbearbeitungsvorrichtung gelöst, die Folgendes umfasst:
ein Striegelelement, eine Einrichtung zur Höhenverstellung des Striegelelements, eine Sensoreinrichtung zum Erfassen der Strohmenge eines Striegelelements, und eine Steuereinrichtung zum Steuern der Einrichtung zur Höhenverstellung des Striegelelements in Abhängigkeit von der erfassten Strohmenge. Die erfindungsgemäße Vorrichtung ermöglicht, dass Stroh zwischen den Stoppeln gleichmäßig verteilt wird und hier eine geschlossene Matte bilden kann. Somit wird eine optimale Konservierung der Bodenfeuchte erreicht. Dadurch, dass die erfindungsgemäße Vorrichtung die Strohmenge eines Striegelelements erfassen und das Striegelelement in Abhängigkeit der Strohmenge anheben kann, ist es möglich bei höheren Strohmengen das Striegelelement anzuheben, so dass die Strohrückstände auch dann gleichmäßig flächig verteilt werden, wenn die ursprüngliche Strohverteilung auf dem Boden sehr ungleichmäßig, z.B. infolge von kurzzeitigem Anhalten des Mähdreschers, war.

Gemäß der vorliegenden Erfindung ist die Steuereinrichtung vorzugsweise derart ausgebildet, dass die Einrichtung zur Höhenverstellung des Striegelelementes dann aktiviert wird, wenn die von der Sensoreinrichtung erfasste Strohmenge über einem vorbestimmten Wert liegt. Durch den voreingestellten Grenzwert wird sichergestellt, dass sich der Striegel nur dann nach oben bewegt, wenn tatsächlich viel Stroh am Striegelelement vorliegt. Somit ist eine gleichmäßige Verteilung des Strohs und eine Schonung der verschiedenen mechanischen und hydraulischen Bauteile sichergestellt.

Vorzugsweise ist das Striegelelement einreihig und weist eine Mehrzahl von Zinken auf. Vorteilhafterweise weisen die Zinken einen Durchmesser in einem Bereich von 9 bis 17 mm, vorzugsweise 15 mm auf und sind in einem Abstand von 70 bis 170 mm zueinander angeordnet. Im Gegensatz zu den herkömmlich schleppend angeordneten Striegelzinken sind die Zinken gemäß der vorliegenden Erfindung auf Griff stehend. Durch den dicht gewählten Zinkenabstand besitzt die Vorrichtung eine Art Planiereffekt.

Gemäß einer bevorzugten Ausführungsform ist die Geschwindigkeit, mit der das Striegelelement höhenverstellt wird, regulierbar. Über die Variation der Aushubgeschwindigkeit kann die Intensität der Strohverteilung reguliert werden. Vorzugsweise wird die Geschwindigkeit durch ein Öldrosselventil reguliert.

Gemäß einer bevorzugten Ausführungsform der vorliegenden Erfindung ist die Sensoreinrichtung zum Erfassen der Strohmenge einen Kraftmesser, z.B. eine Kraftdose, die beispielsweise am Striegelelement angeordnet ist, und die Kraft misst, die auf den Striegel durch das Stroh entgegen der Fahrtrichtung eines Schleppers wirkt. Die gemessene Kraft ist ein Maß für die Strohmenge des Striegelelements.

Die erfindungsgemäße Bodenbearbeitungsvorrichtung kann weiter eine Scheibenegge umfassen, wobei das Striegelelement dann den Bearbeitungswerkzeugen der Scheibenegge in Fahrtrichtung vorgeschaltet ist. Durch diese Ausführungsform können zwei Arbeitsgänge in nur einem Bodenbearbeitungsgerät zusammengefasst werden, was zu nicht unerheblichen Zeit- und Kostenersparnissen führt.

Die vorliegende Erfindung wird unter Bezugnahme der nachfolgenden Figuren näher erläutert. Dabei zeigt
- Figur 1: einen Grafen, der die gemessene Kraft F und den Striegelhub h in Abhängigkeit der Zeit t darstellt.
- Figur 2: eine perspektivische Darstellung eines Ausführungsbeispiels der vorliegenden Erfindung bei dem ein Striegelelement und eine Scheibenegge in einer Vorrichtung integriert sind und
- Figur 3: ein schematisches Schaltbild des Hydraulikkreislaufs gemäß der vorliegenden Erfindung.

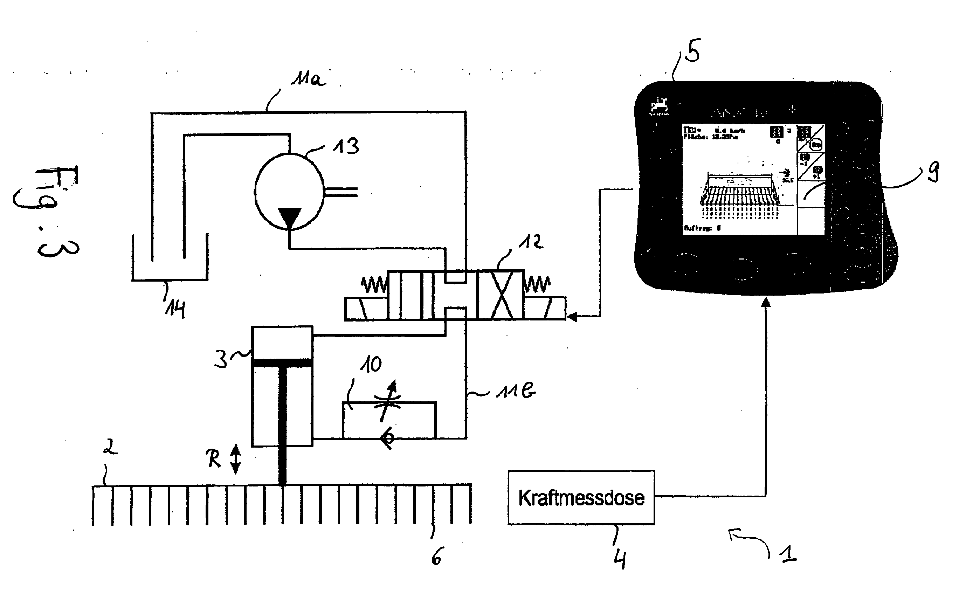

Wie aus der Figur 3 hervorgeht, weist die erfindungsgemäße Bodenbearbeitungsvorrichtung 1 ein einreihiges Striegelelement 2 mit einer Mehrzahl von Zinken 6 auf. Der Zinkendurchmesser liegt in einem Bereich von 9 bis 17, vorzugsweise bei 15 mm. Der Abstand zwischen zwei nebeneinanderliegenden Zinken liegt in einem Bereich von 70 bis 170 mm. Die Zinkenhöhe liegt in einem Bereich von 70 bis 170 mm. Die Länge I des Striegels liegt in einem Bereich von 200 bis 400 mm. Durch den dicht gewählten Zinkenabstand besitzt die Vorrichtung eine Art Planiereffekt.

Das Striegelelement 2 ist durch eine Einrichtung zur Höhenverstellung 3 in vertikaler Richtung, wie durch den Pfeil R in Figur 3 gezeigt, höhenverstellbar angeordnet. In diesem Ausführungsbeispiel ist die Einrichtung zur Höhenverstellung ein Hydraulikzylinder 3. Der schlepperseitige Hydraulikkreislauf 11a, der in bekannter Weise eine Ölpumpe 13 sowie einen Öltank 14 aufweist, ist über den Hydraulikventilblock 12 mit dem vorrichtungsseitigen Hydraulikkreislauf 11 b verbunden. Zur Regulierung der Geschwindigkeit mit der das Striegelelement 2 angehoben wird, ist ein Öldrosselventil 10 vorgesehen. Wie aus Figur 3 hervorgeht, umfasst das Öldrosselventil 10 eine verstellbare Drossel mit Rückschlagventil.

Weiter weist dieses Ausführungsbeispiel als Sensoreinrichtung zum Erfassen der Strohmenge eines Striegelelements eine Kraftmessdose 4 auf, die vorzugsweise, wenn auch in Figur 3 nicht dargestellt, am Striegel 2 angeordnet ist. Die Kraftmessdose, die beispielsweise einen Dehnungsmessstreifen umfasst, misst die Kraft F, die entgegen der Fahrtrichtung eines Schleppers in Abhängigkeit der Strohmenge auf das Striegelelement 2 wirkt. Die gemessene Kraft F ist dann ein Maß für die Strohmenge vor dem Striegelelement 2. Die Kraftmessdose 4 ist mit einer Steuereinrichtung 5 verbunden. Die Steuereinrichtung 5 steuert wiederum über den Hydraulikventilblock 12 den Hydraulikzylinder 3 in Abhängigkeit der von der Kraftmessdose 4 gemessenen Kraft F. Das Öldrosselventil 10 kann entweder manuell oder aber auch über die Steuereinrichtung 5 (hier nicht dargestellt) verstellt werden. Die Steuereinrichtung 5 ist weiter mit einer Anzeige 9 und einem entsprechenden Bedienungspaneel verbunden.

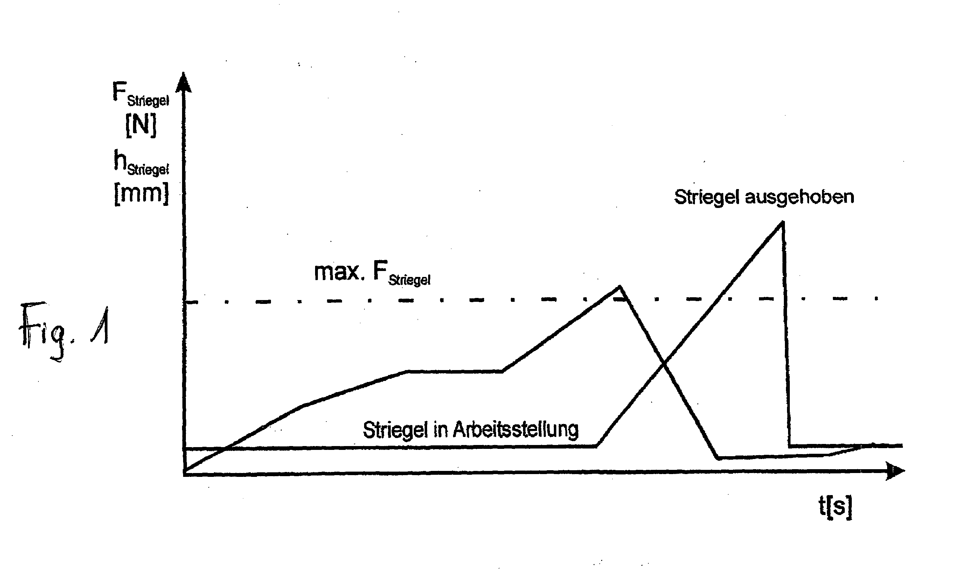

Beim Einsatz der erfindungsgemäßen Vorrichtung wird die Vorrichtung zunächst an einem Schlepper befestigt und an dessen Hydrauliksystem angeschlossen. Dann wird das Striegelelement 2 über die Steuereinrichtung 5 in seine Arbeitsstellung (s. Figur 1) gebracht. Während des Einsatzes der Bodenbearbeitungsvorrichtung 1 wird kontinuierlich die Strohmenge des Striegelelements 2 über die Kraftmessdose 4 erfasst und in der Steuereinrichtung 5 mit einem frei wählbaren Grenzwert (max. F_{Striegel}) verglichen. Solange, wie aus Figur 1 hervorgeht, die gemessene Kraft F unterhalb des frei wählbaren Grenzwertes (max. F_{Striegel}) liegt, verbleibt der Striegel in Arbeitsstellung. Erst wenn die gemessene Kraft F, die ja wiederum ein Maß für die Strohmenge ist, erreicht wird, so wird über die Steuereinrichtung 5 der Hydraulikventilblock 12 und somit der Hydraulikzylinder 3 betätigt, so dass das Striegelelement 2 langsam ausgehoben wird. Die Aushubgeschwindigkeit lässt sich dabei über das Öldrosselventil 10 einstellen und liegt etwa in einem Bereich von 0,02 bis 0,01 m/s. Damit werden die Strohrückstände flächig verteilt. Gleichzeitig nimmt die von der Kraftmessdose 4 gemessene Kraft F ab, wie aus Figur 1 hervorgeht. Das Striegelelement 2 wird jedoch weiter vertikal nach oben bewegt bis ein bestimmter Striegelhub h erreicht ist oder das Striegelelement ganz ausgehoben ist. Nachdem, wie in Figur 1 gezeigt ist, das Striegelelement 2 vollständig ausgehoben worden ist, steuert die Steuereinrichtung 5 den Hydraulikzylinder 3 über den Hydraulikventilblock 12 derart an, dass das Striegelelement wieder in seine Arbeitsstellung verfahren wird, in der es solange verbleibt, bis die gemessene Kraft wieder den Grenzwert (max. F_{Striegel}) erreicht.

Bei ausreichender Strohverteilung durch den Mähdrescher auf der Fläche kann das Striegelelement 2 auch in seiner obersten ausgehobenen Position verbleiben.

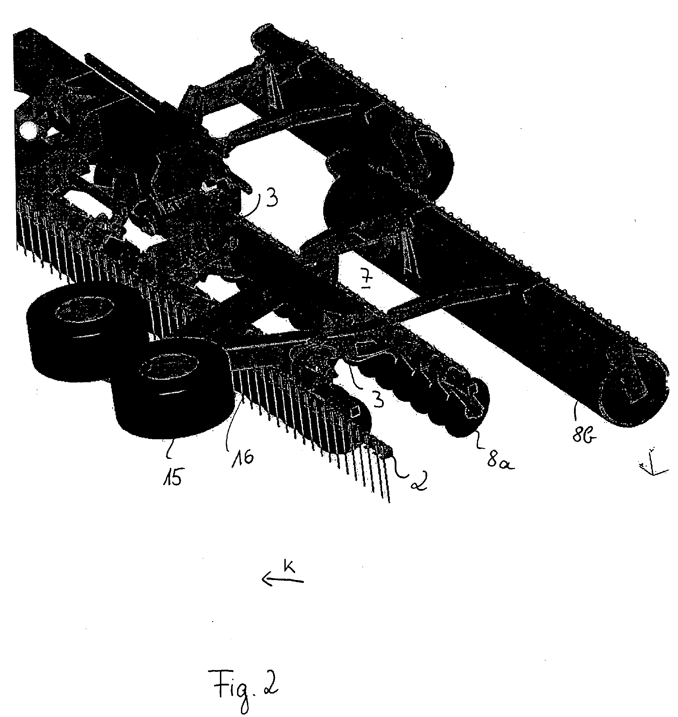

Figur 2 zeigt ein bevorzugtes Ausführungsbeispiel der vorliegenden Erfindung. Bei diesem Ausführungsbeispiel umfasst die Bodenbearbeitungsvorrichtung 1 weiter eine Scheibenegge 7 mit angestellten Hohlscheiben 8a und nachgeordneten Walzen 8b. Das Striegelelement 2 ist dabei in Schlepperrichtung k den Bearbeitungswerkzeugen der Scheibenegge 7, d.h. den angestellten Hohlscheiben 8a und Walzen 8b, vorgeschaltet. Mit 15 ist das Fahrwerk der Vorrichtung bezeichnet. Das Striegelelement 2 ist über die Hydraulikzylinder 3 höhenverstellbar am Rahmen 16 angeordnet. Durch die Hydraulikzylinder 3 kann das Striegelelement 2 in Vertikalrichtung, wie im Zusammenhang mit den Figuren 1 und 3 bereits beschrieben wurde, in Abhängigkeit der Strohmenge ausgehoben werden. Die Kraftmessedose ist in Figur 2 nicht dargestellt. Bei dem in Figur 2 gezeigten Ausführungsbeispiel können mehrere Arbeitsgänge, d.h. Striegeleinsatz und Eggen, gebündelt werden. Gemäß der vorliegenden Erfindung kann das Striegelelement der Scheibenegge 7 bei Bedarf zu- und weggeschaltet werden, so dass die in Figur 2 gezeigte Vorrichtung, wenn der Striegel sich in ausgehobener Position befindet, auch ausschließlich als Scheibenegge verwendet werden kann.

Bei den zuvor gezeigten Ausführungsformen wurde als Sensoreinrichtung 4 zum Erfassen der Strohmenge eines Striegelelementes ein Kraftmesser beschrieben. Die vorliegende Erfindung soll jedoch nicht auf derartige Kraftmesser beschränkt werden. Vielmehr können zum Erfassen der Strohmenge eines Striegelelementes auch andere Einrichtungen, wie z.B. Ultraschall oder optische Sensoren eingesetzt werden.

## Patentansprüche

1. Bodenbearbeitungsvorrichtung umfassend:
- ein Striegelelement (2),
- eine Einrichtung zur Höhenverstellung (3) des Striegelelements (2),
- eine Sensoreinrichtung (4) zum Erfassen der Strohmenge eines Striegelelements (2), und
- eine Steuereinrichtung (5) zum Steuem der Einrichtung zur Höhenverstellung (3) des Striegelelements in Abhängigkeit von der erfassten Strohmenge.

2. Bodenbearbeitungsvorrichtung nach Anspruch 1, in welcher die Steuereinrichtung (5) derart vorgesehen ist, dass die Einrichtung zur Höhenverstellung (4) des Striegelelements aktiviert wird, wenn die von der Sensoreinrichtung (5) erfasste Strohmenge über einem vorbestimmten Wert liegt.

3. Bodenbearbeitungsvorrichtung nach Anspruch 1 oder 2, in welcher das Striegelefement (2) einreihig ist.

4. Bodenbearbeitungsvorrichtung nach einem der vorangegangenen Patentansprüche, in welcher das Striegelelement (2) eine Mehrzahl von Zinken (6) aufweist.

5. Bodenbearbeitungsvorrichtung nach Anspruch 4, in welcher die Zinken (6) einen Durchmesser in einem Bereich von 9 bis 17 mm aufweisen und in einem Abstand von 70 bis170 mm zueinander angeordnet sind.

6. Bodenbearbeitungsvorrichtung nach mindestens einem der vorangegangenen Patentansprüche, in welcher die Geschwindigkeit mit der das Striegelelement (2) höhenverstellbar ist, regulierbar ist.

7. Bodenbearbeitungsvorrichtung nach Anspruch 6, in welcher die Vorrichtung ein Öldrosselventil (10) aufweist, um die Geschwindigkeit mit der das Striegelelement (2) höhenverstellbar ist, zu regulieren.

8. Bodenbearbeitungsvorrichtung nach mindestens einem der vorhergehenden Patentansprüche, in welcher die Sensoreinrichtung (4) zum Erfassen der Strohmenge einen Kraftmesser umfasst.

9. Bodenbearbeitungsvorrichtung nach mindestens einem der vorhergehenden Patentansprüche, in welcher die Bodenbearbeitungsvorrichtung weiter eine Scheibenegge (7) umfasst, wobei das Striegelelement (2) den Bearbeitungswerkzeugen (8a, b) der Scheibenegge (7) vorgeschaltet ist.
